# EUROPEAN PATENT SPECIFICATION

(11) **EP 1 519 896 B1**
(45) Date of publication and mention of the grant of the patent: **30.07.2008**
(21) Application number: 03728024.5
(22) Date of filing: 02.05.2003
(51) Int. Cl.: C01B 31/02, B01J 23/28, B01J 23/745, B01J 23/75, B01J 23/755, B01J 35/02, B01J 37/08, B01J 37/02

(54) **METHOD FOR MAKING CARBON NANOTUBES**
VERFAHREN ZUR HERSTELLUNG VON KOHLENSTOFFNANORÖHREN
PROCEDE DE REALISATION DE NANOTUBES DE CARBONE

(30) Priority: 24.06.2002 JP 2002182468
(43) Date of publication of application: 06.04.2005
(73) Proprietor: HONDA GIKEN KOGYO KABUSHIKI KAISHA, Tokyo 107-8566 (JP); Nakayama, Yoshikazu, Hirakata-shi, Osaka 573-0084 (JP)
(72) Inventor: NAKAYAMA, Yoshikazu, Hirakata-shi, Osaka 573-0084 (JP); KUBOTA, Tadahiro, c/o K K Honda Gijutsu Kenkyusho, Wako-shi, Saitama 351-0113 (JP); KURIYAMA, Nariaki, c/o K K Honda Gijutsu Kenkyusho, Wako-shi, Saitama 351-0113 (JP); SASAHARA, Jun, c/o K. K. Honda Gijutsu Kenkyusho, Wako-shi, Saitama 351-0113 (JP); SUZUKI, Toshifumi, c/o K K Honda Gijutsu Kenkyusho, Wako-shi, Saitama 351-0113 (JP)
(74) Representative: Campbell, Neil Boyd
(86) International application number: PCT/JP2003/005628
(87) International publication number: WO 2004/000728

(56) References cited:
- EP-A- 1 129 990
- EP-A- 1 251 543
- US-A- 6 062 931
- US-A1- 2002 055 010
- CHEN X. H. ET AL: "The formation conditions of carbon nanotubes array based on FeNi alloy island films" THIN SOLID FILMS, 1999, pages 6-9, XP002254581

## Description

### TECHNICAL FIELD

The present invention relates to a method for making carbon film for use in small fuel cells, and in particular to a method for forming a carbon nanotube (CNT) on an electroconductive member.

### BACKGROUND OF THE INVENTION

A carbon nanotube consists of a cylindrical tube made of carbon and is provided with a diameter in the order of nanometers owing to certain desirable properties thereof. Japanese patent laid open publication No. 2000-141084, for instance, discloses the use of carbon film consisting of a carbon nanotube as a carrier for platinum or other catalyst. As a carbon nanotube is highly porous, it can serve as a gas diffusion layer. In the invention disclosed in this patent publication, a carbon nanotube film is formed on an iron or nickel film which is in turn formed on an electrode terminal layer made of gold or the like, and a platinum catalyst is sputtered onto the surface of this carbon nanotube film.

There are other methods for forming a carbon nanotube which use electric arc discharge and heating. Japanese patent laid open publication No. 2001-58805, for instance, discloses a method for making carbon nanotube in a large volume and in a simple manner by mixing fullerene molecules with a transition element or an alloy containing a transition element, and heating the mixture on a ceramic board. However, this patent publication contains no mentioning of the formation of a carbon nanotube on an electroconductive member.

It is known to use a transition metal such as iron and nickel in a fine particle form as a catalyst for forming a carbon nanotube. Such fine metallic particles can be prepared by etching metallic film using laser or microwave and filling metallic film into the pores of zeolite and porous silicon.

### BRIEF SUMMARY OF THE INVENTION

Chen et al (Thin solid Films, 339, 6, 1999) reports the deposition of carbon nanotubes on a system comprising a silica substrate, an Ag layer and a FeNi island film on top of it.

A primary object of the present invention is to provide an improved method for forming a carbon nanotube on an electroconductive member.

A second object of the present invention is to provide a method for forming a carbon nanotube which allows fine metallic particles that can be used as a catalyst for growing a carbon nanotube to be prepared in a simple, economical and efficient manner.

A third object of the present invention is to provide a method for forming a carbon nanotube which is suitable for use in fuel cells.

The present invention accomplishes such objects by providing a method for making a carbon nanotube (5) on an electroconductive member (2), comprising the steps of:
forming a first electroconductive layer on a silicon substrate, where the first electroconductive member is formed of a member selected from a group consisting of Ti, Ni, Al and Cr,
forming a second electroconductive layer on the first electroconductive layer, the second electroconductive layer is formed of a member selected from a group consisting of W, Mo and Ta;
forming a catalytic layer including a metal or alloy that serves as a catalyst for growing a carbon nanotube on the second electroconductive layer; processing the metal or alloy of the catalytic layer so as to turn it into small particles; and
growing a carbon nanotube on the second electroconductive layer by using the small particles of the metal or alloy of the catalytic layer as a catalyst;
wherein the step of processing the metal or alloy of the catalytic layer so as to turn it into small particles comprises the step of heating the catalytic layer formed on the electroconductive member while supplying inert gas.

Thereby, fine metallic or alloy particles that can be used as a catalyst for growing a carbon nanotube can be prepared in a simple, economical and efficient manner, and a carbon nanotube can be efficiently formed on the electroconductive by using it as a catalyst.

The catalytic layer may comprise a member selected from a group consisting of Fe, Ni, Co, Mo and an alloy thereof. The electroconductive member may comprise at least one material selected from a group consisting of Ti, Au, Ni, Co, Cu, Al, Mo, W and Ta. The inert gas may consist of helium or argon.

The prescribed temperature may be in range of 0.49Tm to 0.59Tm where Tm is the melting point of the metal or alloy of the catalytic layer in Kelvin. When the catalytic layer is made of iron, the prescribed temperature may be approximately 700 °C. If the heating temperature is higher or lower than this, the particles tend to become coarser, and a desired particle size cannot be obtained. The small particles of the metal or alloy preferably have a particle size of 0.5 to 50 nm. Particles of such a size provides an adequate catalytic action in forming a carbon nanotube, and can be easily obtained by the method described above. By turning the metal or alloy of the catalytic layer into small particles at such a heating temperature, particles of a desired size can be obtained both easily and efficiently.

The step of growing the carbon nanotube may comprise the step of supplying mixed gas containing hydrocarbon gas and the inert gas at a ratio of 1:2 to 1:50 so that amorphous carbon other than a carbon nanotube or soot may be avoided and a carbon nanotube may be formed in an efficient manner without the growth rate thereof being hampered to any great extent.

The step of supplying the mixed gas may be conducted at a flow rate of 1 to 100 cm/min, and more preferably at a flow rate of approximately 30 cm/min. Thereby, the productivity can be improved by controlling the formation of soot and reducing the amount of the material gas that is expelled without contributing to the formation of the carbon nanotube. When the step of growing the carbon nanotube comprises the step of placing the electroconductive member including the small particles of the metal or alloy in a tube having an inner diameter of approximately 30 mm, the flow rate of the mixed gas that is flowed substantially along the length of the tube is preferably in the order of 200 to 300 seem (standard cubic centimeter per minute).

The electroconductive member is deposited on an inorganic substrate made of silicon. The electroconductive member has a two-layered structure including a titanium (Ti) layer and a tungsten (W) layer formed thereon. Instead of titanium, aluminum (Al), nickel (Ni) or chromium (Cr) can also be used. Instead of tungsten, molybdenum (Mo) or tantalum (Ta) can also be used.

### BRIEF DESCRIPTION OF THE DRAWINGS

Now the present invention is described in the following with reference to the appended drawings, in which:
Figure 1 is a flowchart describing the preferred embodiment of the method for forming a carbon nanotube film according to the present invention;
Figures 2a to 2e are schematic sectional views illustrating an exemplary method for forming a carbon nanotube film according to the present invention;
Figure 3 is schematic sectional view of the device for forming a carbon nanotube film that can be used for implementing the present invention;
Figure 4a to 4e are schematic sectional views illustrating another exemplary method for forming a carbon nanotube film according to the present invention; and
Figures 5a to 5c are photographs showing the states of iron particles for different processing temperatures.

### DETAILED DESCRIPTION OF THE PREFERRED EMBODIMENTS

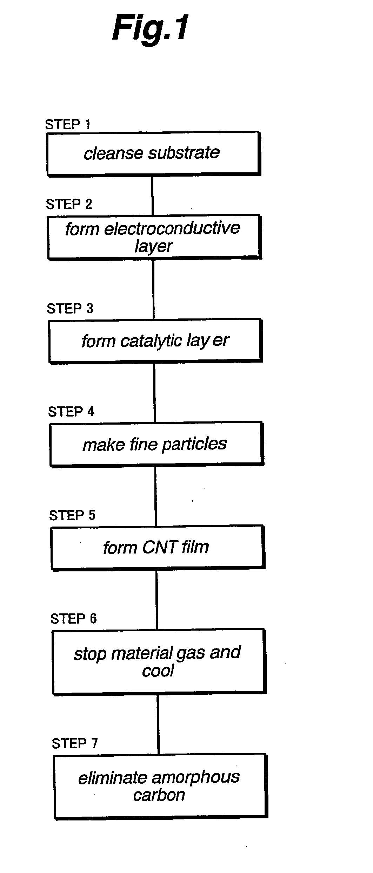

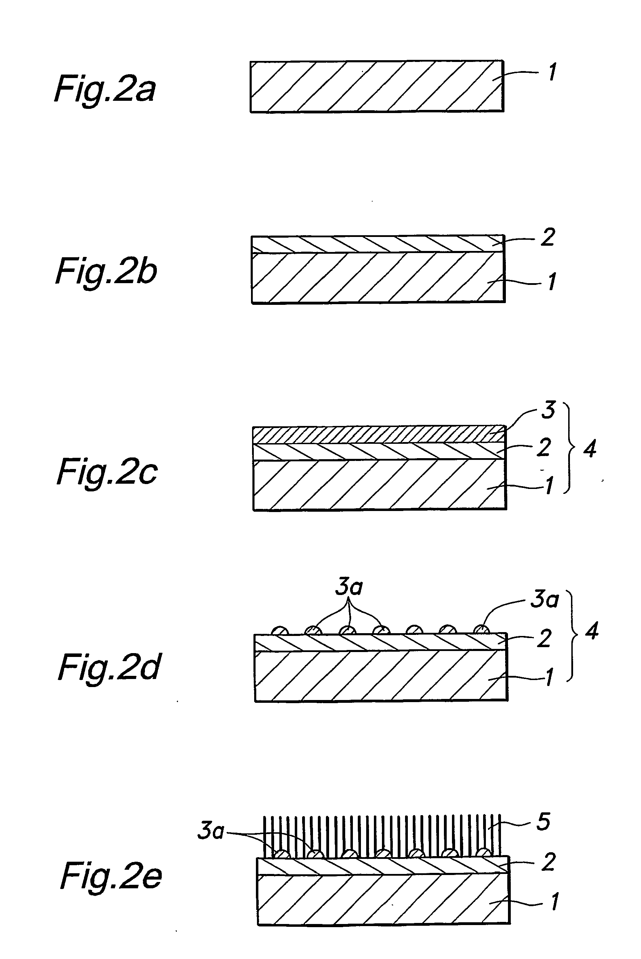

Figure 1 is a flowchart of a preferred embodiment of the method of present invention for forming a carbon nanotube, and Figure 2 includes several views showing the states in the various steps of the flowchart of Figure 1.

In step 1, an inorganic substrate 1 consisting of silicon is cleansed (Figure 2a).

In step 2, onto the inorganic substrate 1 is deposited an electroconductive layer 2 consisting of a metal such as titanium (Ti), gold (Au), nickel (Ni), cobalt (Co), copper (Cu), aluminum (Al), molybdenum (Mo), tungsten (W), tantalum (Ta), or doped semiconductor material, for instance, by vapor deposition using a resistive heater or sputtering (Figure 2b). It is necessary to form an electroconductive layer 2 consisting of a two-layered structure including a titanium (Ti) layer formed over the substrate and a tungsten (W) layer formed on the titanium layer. Tungsten is preferred because it has a high melting point and is therefore resistant to the of the following thermal processes. Titanium improves the contact between the tungsten layer and substrate, and may be substituted by nickel (Ni), aluminum (A1) or chromium (Cr). Tungsten may be substituted by molybdenum (Mo) or tantalum (Ta). If the inorganic substrate 1 consists of conductive silicon (for instance, doped silicon), it be advantageously used for conducting electricity to an external circuit.

In step 3, a catalytic layer 3 consisting of a transition metal such as iron (Fe) and capable of a catalytic action for growing a carbon nanotube film is formed on the electroconductive layer 2 (Figure 2c). This can be accomplished by using electron beam vapor deposition. Iron may be substituted by nickel (Ni), cobalt (Co) or molybdenum (Mo). Alternatively, two or more members of a group consisting of iron, nickel, cobalt and molybdenum, or an alloy of such metals can also be used. This combination of the electroconductive layer 2 and catalytic layer 3 formed on the substrate 1 is referred to as an assembly 4 hereinafter.

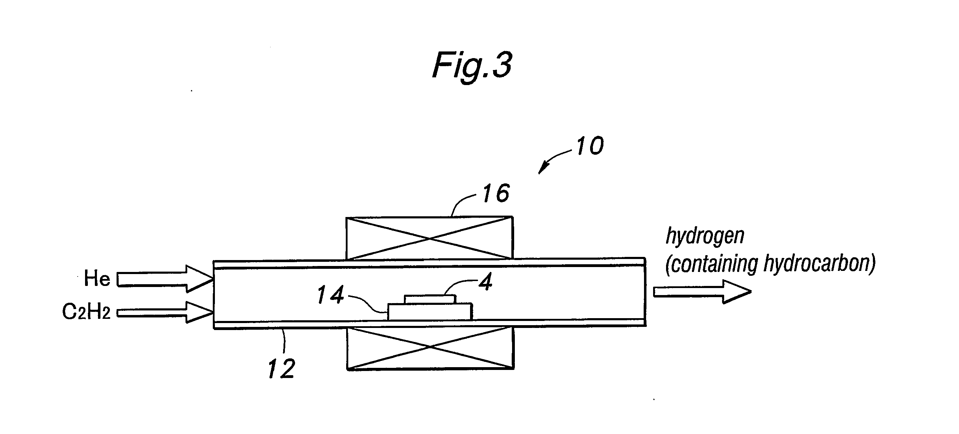

Figure 3 is a schematic longitudinal sectional view of a preferred device for forming a carbon nanotube on the electroconductive layer 2 by suitably processing the assembly 4 obtained in step 3. This device 10 comprises a quartz tube 12 defining an inner bore 30 mm in inner diameter for conducting desired gas along the length thereof. A quartz holder 14 is provided inside this tube 12 for holding the assembly 4 to be processed. The quartz tube 12 is placed in an electric furnace 16 so as to be heated to a desired temperature.

Referring to Figure 1 once again, according to the present invention, in step 4, the assembly 4 is secured to the quartz holder 14 in the quartz tube 12, and is heated for a prescribed period of time by suitably adjusting the temperature of the electric furnace 16 while inert gas such as helium and argon is conducted through the quartz tube 12 from an end (left end in Figure 3) thereof at a prescribed velocity. As a result, the metal or alloy of the catalytic layer 3 on the surface of the assembly 4 is turned into fine particles so that a large number of fine particles of the metal or alloy 3a can be obtained (Figure 2d). By thus processing the catalytic layer 3, and obtaining a large number of catalytic particles, the catalytic action during the process of growing the carbon nanotube can be enhanced. If the particles are not fine enough, the direction of the growth of the carbon nanotube may become uneven, and this prevents the formation of a clean film. A particle size below 50 nm is preferred. When forming fine particles of metal or alloy for the catalytic layer 3 by heating and supplying inert gas at the same time, the particles can be made finer as the heating temperature is increased. However, if the particle size is smaller than 0.5 nm, the aggregating force of the particles becomes so strong that the size of the particles in the aggregated parts thereof may become even greater, and it becomes difficult to control the particle size below 0.5 nm and make the particle size uniform at the same time. This leads to a reduction in productivity. Therefore, the particle size is preferred to be between 0.5 nm and 50 nm. The process of preparing the metallic or alloy particles for the catalytic layer 3 described above will be referred to as "preprocessing" hereinafter.

The optimum heating temperature in the preprocessing may vary depending on the kind of metal or alloy that is used in the catalytic layer 3. As will be discussed in connection with preferred embodiments, when the catalytic layer 3 is made of iron (Fe), the optimum heating temperature would be approximately 700 °C (973 °K). This temperature in absolute (Kelvin) temperature is approximately 0.54 times the melting point of iron or 1808 °K (1536 °C), and is substantially equal to the temperature from which the atoms become able to move freely in solid (first recrystallization temperature). Thus, the optimum heating temperature for turning the metal or alloy for the catalytic layer into fine particles is in the vicinity of 0.54 Tm (0.54 Tm ± 0.05Tm) where Tm is the melting point of the metal or alloy in absolute temperature.

When the preprocessing is concluded, in step 5, the flow rate of the inert gas is reduced, and material gas (hydrocarbon gas) such as acetylene, methane and ethylene is introduced into the tube at a prescribed flow rate. This causes a carbon nanotube having a diameter in the range of 0.5 to 100 nm to grow on the electroconductive layer 2, for instance, in the form of a carbon nanotube film 5 having a thickness in the range of 0.01 µm to 300 µm (Figure 2e). The produced carbon nanotube film 5 is generally oriented perpendicularly with respect to the assembly 4 or the substrate 1, and demonstrates a favorable electroconductivity in this direction. The material gas generates hydrogen as the carbon nanotube is produced, and the hydrogen along with the excess gas (hydrocarbon) that was not used is expelled from the other end (right end in Figure 3) of the quartz tube 12.

During the process of forming the carbon nanotube, if the flow rate of the material gas is excessive, amorphous carbon other than carbon nanotube or soot is produced, and this prevents the growth of the carbon nanotube resulting in a reduction of the content of the carbon nanotube in the film 5. Conversely, if the flow rate of the material gas is inadequate, the growth of the carbon nanotube is reduced resulting in a poor productivity. The flow rate ratio of the material gas to the carrier gas (inert gas) is preferably from 1/2 to 1/50, and more preferably approximately 1/10.

The flow velocity of the mixed gas consisting of the inert gas and material gas along the surface of the assembly 4 also affects the formation of the carbon nanotube film 5. If the flow velocity is too small, soot is actively produced and the content of the carbon nanotube in the film 5 decreases. If the flow velocity is excessive, much of the material gas is expelled without contributing to the formation of the carbon nanotube, and the productivity is impaired. A flow rate in the range of 1 cm/minute to 100 cm/minute is preferred, and a flow rate in the range of 30 cm/minute to 40 cm/minute (corresponding to approximately 200 to 300 seem when the inner diameter of the tube is 30 mm) is particularly preferred. A flow rate of approximately 30 cm/minute (corresponding to approximately 200 sccm when the inner diameter of the tube is 30 mm) is most preferred.

During the process of forming the film, by keeping the flow rate of the material gas and carrier gas (inert gas) constant, the carbon nanotube can be made to grow vertically with respect to the substrate. By slightly varying the flow rate, the carbon nanotube can be made to grow in a curved manner. Curving the carbon nanotube promotes the entangling of the carbon nanotube fibers, and this in turn increases the firmness of the carbon nanotube film 5 and develops electroconductivity in lateral directions.

When the formation of the film is concluded, in step 6, the introduction of the material gas is terminated and the assembly is allowed to cool to the room temperature by continuing the flow of the inert gas. In step 7, the assembly 4 having the carbon nanotube film 5 formed thereon is removed from the electric furnace 16 and is processed by a high temperature in the atmosphere so that the amorphous carbon and the part of the carbon nanotube containing a large number of defects are selectively eliminated by oxidization and numerous gaps is produced in the carbon nanotube film 5. The part of the carbon nanotube having a substantially perfect crystalline configuration is resistant to oxidization and thereby remains unaffected. By suitably controlling the oxidization process, the density of the carbon nanotube fibers can be adjusted. The density of the carbon nanotube fibers may be in the order of 1,000 to 10¹² fibers/mm². The agent for the oxidization may also consist of gas containing oxygen at a prescribed partial pressure or heated nitric acid as well as atmosphere.

Thus, according to the present invention, a large number of metallic or alloy particles 3a can be formed by heating the metal or alloy in the catalytic layer 2 formed on the electroconductive member (electroconductive layer) 2 at a prescribed temperature while supplying inert gas. The carbon nanotube film 5 can be formed on the electroconductive member 2 in a favorable manner by growing carbon nanotube film 5 with the aid of the metallic or alloy particles 3a serving as a catalyst. For the formation of the carbon film, thermal CVD (which is also called as the chemical vapor deposition or chemical gas-phase growth method) was used in the foregoing embodiment, but other methods such as the microwave plasma method (plasma CVD), laser vapor deposition and sputtering can be also used.

When the carbon nanotube film 5 formed on the electroconductive member 2 as described above is used in a fuel cell, a catalyst such as platinum is deposited on the carbon nanotube film 5 and an electrolyte layer is placed thereon. Therefore, when the carbon nanotube film 5 is used in a fuel cell, the separator (inorganic substrate 1), electrode (electroconductive layer 2 and carbon nanotube film 5), platinum catalyst and electrolyte can be formed one over the other in a continuous matter and the interfaces between these layers can be formed highly neatly. Therefore, as opposed to the conventional fuel cell, there is no need to apply an external force to the film/electrode assembly (MEA) by using threaded bolts or the like for the purpose of reducing the contact resistance on the surface of the electrode, and the interface resistance can be minimized in a stable manner. Because the interface resistance can be minimized both easily and reliably, the production management can be simplified and the productivity can be improved. Also, the elimination of the threaded bolts or other means for applying an external force allows the size of the fuel cell to be minimized. Also, using the carbon nanotube film 5 in the fuel cell provides the following advantages. (1) The overall resistance of the fuel cell can be minimized because the carbon nanotube film can be formed as a thin film without any difficulty. (2) Because the hydrophobic property that is required for the oxygen electrode is produced on the surface of the carbon nanotube surface, the property of the fuel cell is prevented from being prematurely degraded by the clogging of the pores with water. (3) Because the carbon nanotube having a relatively high crystalline configuration is resistant to corrosion, the service life of the fuel cell can be extended. (4) Because the carbon nanotube is highly porous, it serves as an excellent gas diffusion layer which favorably permits transmission of gas such as hydrogen and oxygen and offers a large surface area for adequately promoting the reaction.

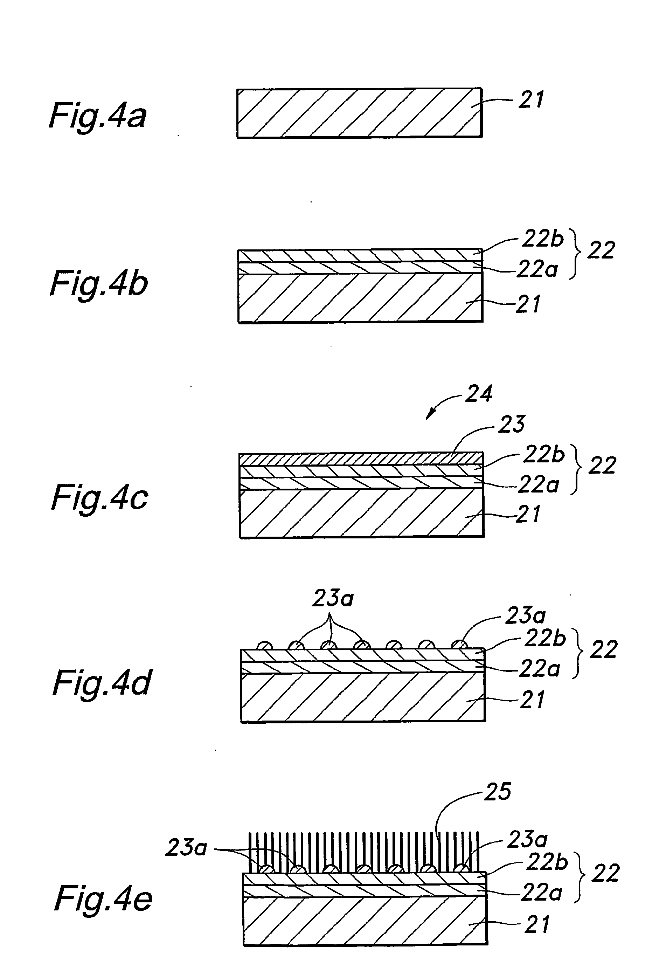

With reference to the schematic sectional view of Figure 4, another embodiment of the method for forming a carbon nanotube according to the present invention is described in the following. The device illustrated in Figure 3 was used for the film forming process.

A silicon substrate 21 having a mirror finished surface is cleansed in sulfuric acid - hydrogen peroxide for 10 minutes, and is then rinsed in water. Oxide film thereon is removed by using buffered hydrofluoric acid (MHF) and is dried (Figure 4a). Titanium (Ti) film 22a is formed on the cleansed silicon substrate 21 to a thickness of 50 nm at the rate of 1 nm/sec under a pressure of 6 x 10⁻⁵ Pa by resistive heating vapor deposition, and tungsten (W) film 22b is formed thereon to a thickness of 100 nm under an Ar partial pressure of 5 x 10⁻³ Torr (6.7 x 10⁻⁴ Pa) by RF sputtering (Figure 4b). The RF sputtering is suited for forming film of material having a high melting point such as tungsten. The titanium (Ti) film 22a and tungsten (W) film 22b forms an electroconductive layer 22. Then, under a pressure of 1 x 10⁻⁴ Pa, iron (Fe) is deposited on the tungsten film 22b at the rate of 0.1 nm/sec to a thickness of 5 nm so as to form a catalytic layer 23 having a thickness of 5 nm (Figure 4c). Electron beam vapor deposition is suited for forming film of material having a relatively low melting point such as iron. The assembly having the electroconductive layer 22 and catalytic layer 23 formed on the silicon substrate 21 is secured to the quartz holder 14 placed in the quartz tube 12 in the thermal CVD device 10 shown in Figure 3. The inner diameter of the quartz tube 12 is 30 mm. Helium gas is introduced into the quartz tube 12 at the flow rate of 230 sccm, and the temperature of the electric furnace 16 is set to approximately 700 °C. When the temperature of the electric furnace 16 substantially reaches 700 °C, the same temperature is maintained for 5 to 30 minutes so that the iron 23 on the surface of the assembly turns into fine particles 23a (Figure 4d).

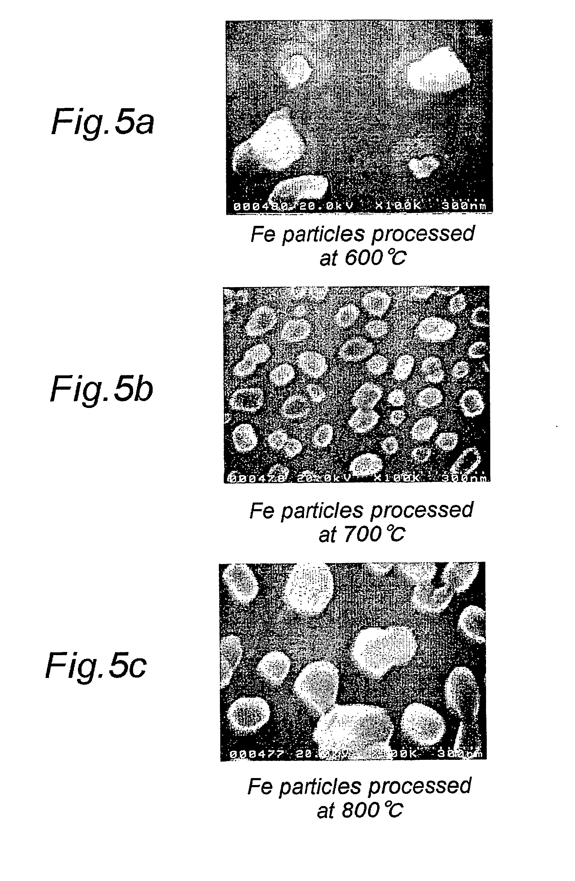

Figure 5 includes photographs that show the state of the iron particles 23a when the heating temperature was changed. As shown in Figure 5(a), when the heating temperature was 600 °C which is lower than 700 °C, the iron did not adequately turn into fine particles. As shown in Figure 5(c), when the heating temperature was 800 °C which is higher than 700 °C, the iron particles became coarse and failed to turn into adequately fine particles. According to the present embodiment, the iron on the surface turned into fine particles in an optimum fashion when the heating temperature was 700 °C. Thus, according to the present invention, the heating temperature of 700 °C was most desirable in obtaining fine particles for the catalytic layer 23. However, how the catalytic metal turns into fine particles very much depends on the thickness of the catalytic layer 23, wettability of the lower electroconductive layer 22, configuration of the electroconductive layer 22 and heating time, and the optimum temperature may well depend on such factors.

After the iron of the catalytic layer 23 turns into small particles, acetylene (C₂H₂) is introduced into the tube at the flow rate of 30 sccm while the flow rate of helium is reduced to 200 sccm. After about fifteen minutes of processing, a multi-walled nanotube (MWNT) 25 having a thickness of approximately 30 µm is obtained (Figure 4e). Thereafter, the supply of acetylene is terminated and the assembly is cooled to the room temperature by flowing helium. The assembly 24 having the MWNT 25 formed thereon is removed from the tube, and amorphous carbon is removed by processing the assembly in the atmosphere for five minutes at the temperature of 700 °C. This produces a carbon nanotube structure having numerous gaps therein. The produced carbon nanotube consists of MWNT having a diameter in the range of 10 to 50 nm and the film is formed by fibers extending perpendicularly to the substrate.

Thus, according to the present invention, the metal or alloy of the catalytic layer can be turned into fine particles both easily and reliably by first forming the catalytic layer consisting of the metal or alloy serving as a catalyst for forming a carbon nanotube on an electroconductive member and then keeping it at a prescribed temperature while supplying inert gas, and the catalytic particles prepared in this manner allow the carbon nanotube to be formed on the electroconductive member in an efficient manner.

Although the present invention has been described in terms of preferred embodiments thereof, it is obvious to a person skilled in the art that various alterations and modifications are possible without departing from the scope of the present invention which is set forth in the appended claims.

## Claims

1. A method for making a carbon nanotube on an electroconductive member, comprising the steps of
forming a first electroconductive layer on a silicon substrate, where the first electroconductive member is formed of a member selected from a group consisting of Ti, Ni, Al and Cr,
forming a second electroconductive layer on the first electroconductive layer, the second electroconductive layer is formed of a member selected from a group consisting of W, Mo and Ta;
forming a catalytic layer including a metal or alloy that serves as a catalyst for growing a carbon nanotube on the second electroconductive layer,
processing the metal or alloy of the catalytic layer so as to turn it into small particles; and
growing a carbon nanotube on the second electroconductive layer by using the small particles of the metal or alloy of the catalytic layer as a catalyst;
wherein the step of processing the metal or alloy of the catalytic layer so as to turn it into small particles comprises the step of heating the catalytic layer formed on the electroconductive member while supplying inert gas.

2. A method for making a carbon nanotube according to claim 1
wherein the step of growing the carbon nauotube comprises the step of supplying mixed gas containing hydrocarbon gas and the inert gas, and
wherein the step of supplying the mixed gas is conducted at a flow rate of 1 to 100 cm/min.

3. A method for making a carbon nanotube according to claim 2, wherein the step of supplying the mixed gas is conducted at a flow rate of approximately 30 cm/min.

4. A method for making a carbon nanotube according to claim 1
wherein the step of growing the carbon nanotube comprises the step of supplying mixed gas containing hydrocarbon gas and the inert gas, and
wherein the step of growing the carbon nanotube comprises the step of placing the silicon substrate formed with the first and second electroconductive layers and the small particles of the metal or alloy in a tube having an inner diameter of approximately 30 mm, and flowing the mixed gas substantially along the length of the tube at a flow rate of 200 to 300 seem (standard cubic centimeter per minute).

5. A method for making a carbon nanotube according to claim 1, wherein the silicon substrate has a mirror finished surface and the first electroconductive layer is formed on the mirror finished surface.

## Patentansprüche

1. Verfahren zur Herstellung einer Kohlenstoff-Nanoröhre an einem elektrisch leitenden Element, die Schritte umfassend:
Ausbilden einer ersten elektrisch leitenden Schicht auf einem Siliciumsubstrat, wobei das erste elektrisch leitende Element aus einem Element gebildet wird, das ausgewählt aus einer Gruppe wird, die aus Ti, Ni, Al und Cr besteht;
Ausbilden einer zweiten elektrisch leitenden Schicht auf der ersten elektrisch leitenden Schicht, wobei die zweite elektrisch leitende Schicht aus einem Element gebildet wird, das ausgewählt aus einer Gruppe wird, die aus W, Mo und Ta besteht;
Ausbilden einer katalytischen Schicht, die ein Metall oder eine Legierung enthält, die als Katalysator dienen, um eine Kohlenstoff-Nanoröhre auf der zweiten elektrisch leitenden Schicht zu züchten;
Verarbeiten des Metalls oder der Legierung der katalytischen Schicht, um somit diese in kleine Partikel umzuwandeln; und
Züchten einer Kohlenstoff-Nanoröhre auf der zweiten elektrisch leitenden Schicht unter Verwendung der kleinen Partikel des Metalls oder der Legierung der katalytischen Schicht als Katalysator;
wobei der Schritt des Verarbeitens des Metalls oder der Legierung der katalytischen Schicht so, dass diese in kleine Partikel umgewandelt werden, den Schritt des Erhitzens der auf dem elektrisch leitenden Element ausgebildeten katalytischen Schicht umfasst, während Schutzgas zugeführt wird.

2. Verfahren zur Herstellung einer Kohlenstoff-Nanoröhre nach Anspruch 1,
wobei des Schritt des Züchtens der Kohlenstoff-Nanoröhre den Schritt des Zuführens von Mischgas umfasst, das Kohlenwasserstoffgas und das Schutzgas enthält, und
wobei der Schritt des Zuführens des Mischgases mit einer Strömungsrate von 1 bis 100 cm/min durchgeführt wird.

3. Verfahren zur Herstellung einer Kohlenstoff-Nanoröhre nach Anspruch 2, wobei der Schritt des Zuführens des Mischgases mit einer Strömungsrate von etwa 30 cm/min durchgeführt wird.

4. Verfahren zur Herstellung einer Kohlenstoff-Nanoröhre nach Anspruch 1,
wobei der Schritt des Züchtens der Kohlenstoff-Nanoröhre den Schritt des Zuführens von Mischgas umfasst, das Kohlenwasserstoffgas und das Schutzgas enthält, und
wobei der Schritt des Züchtens der Kohlenstoff-Nanoröhre den Schritt des Platzierens des Siliciumsubstrats, das mit den ersten und zweiten elektrisch leitenden Schichten und den kleinen Partikeln des Metalls oder der Legierung ausgebildet worden ist, in einer Röhre mit einem Innendurchmesser von etwa 30 mm, sowie das Strömen des Mischgases im Wesentlichen längs der Röhre mit einer Strömungsrate von 200 bis 300 sccm (Standard-Kubikzentimeter pro Minute) umfasst.

5. Verfahren zur Herstellung einer Kohlenstoff-Nanoröhre nach Anspruch 1, wobei das Siliciumsubstrat eine spiegelnde Oberfläche aufweist und die erste elektrisch leitende Schicht auf der spiegelnden Oberfläche ausgebildet wird.

## Revendications

1. Procédé pour fabriquer un nanotube en carbone sur un élément électroconducteur, comprenant les étapes consistant :
à former une première couche électroconductrice sur un substrat de silicium, où le premier élément électroconducteur est formé d'un élément choisi dans le groupe constitué par Ti, Ni, Al et Cr ;
à former une seconde couche électroconductrice sur la première couche électroconductrice, la seconde couche électroconductrice étant formée d'un élément choisi dans un groupe constitué par W, Mo et Ta ;
à former une couche catalytique incluant un métal ou un alliage qui sert de catalyseur pour développer un nanotube en carbone sur la seconde couche électroconductrice ;
à traiter le métal ou l'alliage de la couche catalytique de façon à le transformer en petites particules ; et
à développer un nanotube en carbone sur la seconde couche électroconductrice en utilisant les petites particules du métal ou de l'alliage de la couche catalytique en tant que catalyseur ;
dans lequel l'étape consistant à traiter le métal ou l'alliage de la couche catalytique de façon à le transformer en petites particules comprend l'étape consistant à chauffer la couche catalytique formée sur l'élément électroconducteur tout en apportant un gaz inerte.

2. Procédé pour fabriquer un nanotube en carbone selon la revendication 1,
dans lequel l'étape consistant à développer le nanotube en carbone comprend l'étape consistant à apporter un mélange gazeux contenant un gaz hydrocarboné et le gaz inerte, et
dans lequel l'étape consistant à apporter le mélange gazeux est effectuée à une vitesse d'écoulement de 100 cm/min.

3. Procédé pour fabriquer un nanotube en carbone selon la revendication 2, dans lequel l'étape consistant à apporter le mélange gazeux est effectuée à une vitesse d'écoulement d'approximativement 30 cm/min.

4. Procédé pour fabriquer un nanotube en carbone selon la revendication 1,
dans lequel l'étape consistant à développer le nanotube en carbone comprend l'étape consistant à apporter un mélange gazeux contenant un gaz hydrocarboné et le gaz inerte, et
dans lequel l'étape consistant à développer le nanotube en carbone comprend l'étape consistant à placer le substrat en silicium formé avec les première et seconde couches électroconductrices et les petites particules du métal ou de l'alliage dans un tube ayant un diamètre interne d'approximativement 30 mm, et à faire passer le mélange gazeux essentiellement le long de la longueur du tube à une vitesse d'écoulement de 200 à 300 ccnm (centimètres cubes normaux par minute).

5. Procédé pour fabriquer un nanotube en carbone selon la revendication 1, dans lequel le substrat en silicium a une surface à finition miroir et la première couche électroconductrice est formée sur la surface à finition miroir.
